# EUROPÄISCHE PATENTANMELDUNG

(11) **EP 2 853 687 A1**
(43) Veröffentlichungstag der Anmeldung: **01.04.2015**
(21) Anmeldenummer: 13186669.1
(22) Anmeldetag: 30.09.2013
(51) Int. Cl.: F01D 5/14

(54) **Turbinenschaufel, und zugehörige Stator, Rotor, Turbine und Kraftwerksanlage**

(71) Anmelder: Siemens Aktiengesellschaft, 80333 München (DE)
(72) Erfinder: Heilos, Andreas, 45479 Mülheim an der Ruhr (DE); Schneider, Oliver, 46487 Wesel (DE); Böttcher, Andreas, Dr., 40822 Mettmann (DE); Koch, Daniela, 45130 Essen (DE); Kunte, Robert, Dr., 40212 Düsseldorf (DE); Siebenborn, Nicola, 45479 Mülheim an der Ruhr (DE); Völker, Stefan, Dr., 47447 Moers (DE)

(57) **Zusammenfassung**

Eine Turbinenschaufel (120, 130) für eine Turbine (100) mit einer Plattform (158), an der ein im Querschnitt profiliertes Schaufelblatt (156) angeordnet ist, soll vermittels technisch besonders einfacher Maßnahmen eine höhere Lebensdauer aufweisen. Dazu ist in einem Übergangsbereich (160) zwischen Plattform (158) und Schaufelblatt (156) in die dem Schaufelblatt (156) zugewandte Oberfläche der Plattform (158) eine sich parallel zum Schaufelblatt (156) erstreckende Nut (164) eingebracht.

## Beschreibung

Die Erfindung betrifft eine Turbinenschaufel für eine Turbine mit einer Plattform, an der ein im Querschnitt profiliertes Schaufelblatt angeordnet ist.

Turbinenschaufeln der oben genannten Art dienen in Turbinen zur Umwandlung der Energie eines heißen Gasstroms in rotatorische Energie. Sie weisen typischerweise ein von Hohlräumen zur Führung von Kühlluft durchzogenes, in der Art einer Flugzeugtragfläche profiliertes Schaufelblatt auf, an das sich in Längsrichtung der Schaufel eine Plattform anschließt. An die Plattform schließt sich eine typischerweise in der Art einer Nut-Feder-Verbindung ausgestaltete Befestigung an. Die Plattform dient zur Abdichtung des Befestigungsbereichs gegen das in der Turbine strömende Heißgas.

Gegossene Turbinenschaufeln weisen dabei häufig einen Übergangsbereich zwischen Schaufelblatt und Plattform auf, welcher durch eine hohlkehlartige Verrundung die Schaufelseitenwände in diesem Bereich verdickt. Im Übergangsbereich ist somit eine Materialanhäufung vorhanden, welche auch einen Steifigkeitssprung des Schaufelblatts mit sich bringt. Das Schaufelblatt ist somit im Bereich der Plattform steifer als in Bereichen in Richtung der Schaufelspitze. Damit verursachen aber die zwischen innerer Kühlluft und außen strömendem Heißgas bestehenden Temperaturgradienten im Bereich der Plattform hohe Wärmespannungen, die die Lebensdauer der Turbinenschaufel begrenzen und den Wartungsaufwand erhöhen.

Lösungsansätze hierfür bestanden bislang darin, die wärmeisolierende Beschichtung im Bereich der Plattform zu verstärken, was jedoch den technischen Aufwand für die Herstellung und damit die Kosten erhöht. Anpassungen hinsichtlich der Dickenverteilung sind nur bedingt möglich, da dies zu Schwierigkeiten im Gießprozess führen könnte und die Kernform zu komplex würde. Beispielhaft für eine derartige Anpassung sei die WO 2005/068786 A1 genannt, in der vorgeschlagen wird, den Übergangsbereich zwischen Plattform und Schaufelblatt doppelwandig auszugestalten. Die Innenwand ist dabei tragend und vergleichsweise komplex mit einer stufenartig nach innen abgesetzten Oberfläche ausgestaltet, während die Außenwand nicht tragend und aerodynamisch optimiert ist. Hier ergibt sich die Schwierigkeit, dass eine zusätzliche Wand auf der Schaufel angebracht werden muss. Eine Herstellung der Turbinenschaufel aus einem Guss ist nicht möglich.

Es ist daher Aufgabe der Erfindung, eine Turbinenschaufel der eingangs genannten Art anzugeben, die vermittels technisch besonders einfacher Maßnahmen eine höhere Lebensdauer aufweist.

Diese Aufgabe wird erfindungsgemäß dadurch gelöst, dass in einem Übergangsbereich zwischen Plattform und Schaufelblatt in die dem Schaufelblatt zugewandte Oberfläche der Plattform eine sich parallel zum Schaufelblatt erstreckende Nut eingebracht ist.

Die Erfindung geht dabei von der Überlegung aus, dass die mechanischen Spannungsbelastungen im Übergangsbereich zwischen Plattform und Schaufelblatt technisch am einfachsten durch eine Anpassung der Geometrie zu reduzieren wären. Ein stattdessen weiteres Erhöhen der Dicke der wärmedämmenden Beschichtung ist nachteilig, da diese sich sonst leicht wieder lösen. Hierbei ist jedoch eine Optimierung der Geometrie hinsichtlich der Verrundung nur bedingt erfolgreich, weil auch die Dehnung des Schaufelblattes in die steife Richtung, d. h. in die Ebene der Plattform erfolgt, so dass thermisch immer Spannungen induziert werden können. Daher sollte zur Reduzierung der Spannungen die starre Kopplung zwischen Plattform und Schaufelblatt aufgehoben werden. Indem eine elastische Bewegung in diesem Übergangsbereich zugelassen wird, werden auch die Spannungen reduziert. In technisch besonders einfacher Weise wird diese elastische Entkopplung dadurch erreicht, dass eine Nut am Rand des Schaufelblatts in die Plattform eingebracht wird. Diese erlaubt in der Art einer Entlastungsnut eine Bewegung zwischen Schaufelblatt und Plattform in Richtung der Ebene der Plattform und senkt die Spannungsbelastung des Bauteils erheblich.

Vorteilhafterweise geht die Oberfläche des Schaufelblatts dabei gerade in eine erste Seitenwand der Nut über. Hierdurch wird einerseits eine aerodynamisch vorteilhafte Wandausgestaltung erzeugt, die auch einfach gekühlt werden kann. Andererseits wird so ein vergleichsweise elastischer Übergangsbereich ohne versteifende Stufen gewährleistet.

In weiterer vorteilhafter Ausgestaltung ist in die dem Schaufelblatt abgewandte Oberfläche der Plattform eine Vertiefung derart eingebracht ist, dass eine zweite Seitenwand der Nut eine reduzierte Dicke aufweist. Wie oben beschrieben kann die erste Seitenwand der Nut direkt in das Schaufelblatt übergehen und hat, da das Schaufelblatt hohl ist, nur die Dicke der Schaufelblattwand. Die andere Seitenwand der Nut ist hingegen plattformseitig angeordnet. Wird hier rückseitig eine Vertiefung auf der Unterseite der Plattform eingebracht, wird auch die Wandstärke der zweiten Seitenwand reduziert, so dass sich im Profil eine Bogenform ergibt, die eine besonders hohe Flexibilität aufweist und Spannungen aufnehmen kann. Die resultierende Wandstärke ist dabei so gewählt, dass die Verformungen nicht zu Rissen in der Nut führen und dennoch das Drehmoment aufgenommen werden kann.

Die Nut kann hierbei komplett umlaufend ausgestaltet sein. In besonders vorteilhafter Ausgestaltung ist sie jedoch in einem Bereich angeordnet, dessen betriebliche mechanische Spannungsbelastung oberhalb eines vorgegebenen Grenzwertes liegt. Die Spannungsbelastungen an verschiedenen Orten der Turbinenschaufel im Betrieb können beispielsweise mittels Simulationen ermittelt werden. Die Entlastungsnut wird dann gezielt an den Stellen eingebracht, an denen die Spannungsbelastungen besonders hoch sind, d. h. an denen sie oberhalb eines bestimmten Werts liegen, der anhand der Simulationen bestimmt wird.

Die Nut, die direkt an den Ansatz des Schaufelblatts grenzt, nimmt die Stelle der bisher typischerweise vorhandenen Verrundung ein. In bestimmten Fällen kann jedoch eine derartige Verrundung aus strömungsdynamischen Gründen gewünscht sein. In diesem Fall ist vorteilhafterweise in die Plattform eine zur Nut hin in Richtung des Schaufelblatts ansteigende Verrundung eingebracht. Die Verrundung wird also vor der Nut eingebracht und durch die Nut unterbrochen. Hierdurch wird die Flexibilität der Entlastungsnut mit der aerodynamisch vorteilhaften Außenkontur der Verrundung kombiniert.

In weiterer vorteilhafter Ausgestaltung ist in die Nut eine Anzahl von Kühlluftbohrungen eingebracht. Diese ermöglichen eine aktive Kühlung der Entlastungsnut sowie - insbesondere in Verbindung mit dem direkten geraden Übergang der Seitenwand der Nut in die Schaufelkontur - eine sehr homogene Ausströmung von Kühlluft zur Filmkühlung des Schaufelblatts.

Die Einbringung einer Nut zur Entlastung entfaltet besondere Vorteile, wenn die beschriebene Turbinenschaufel als Leitschaufel ausgelegt ist. Gerade bei Leitschaufeln, die auf beiden Längsseiten des Schaufelblatts eine beschriebene Plattform aufweisen, einmal zur Befestigung am Außengehäuse und einmal zur Befestigung an einem die Turbinenwelle umschließenden Innenring, treten die eingangs beschriebenen Risse auf, so dass die Einbringung einer Nut in den Übergangsbereichen vom Schaufelblatt zu den Plattformen hier besonders effektiv die Rissbildung verhindert.

Alternativ ist die Entlastungsnut aber auch von besonderem Vorteil, wenn die Turbinenschaufel als Laufschaufel ausgelegt ist. Rotierende Schaufeln werden nämlich zusätzlich zu den hohen Temperaturen bis zu 1500 Grad Celsius durch die Fliehkraft im Betrieb belastet. Auch der Gasdruck auf das Schaufelblatt trägt zur Belastung bei. Auch hier treten daher erhebliche Spannungen auf, die durch die Einbringung einer Entlastungsnut reduziert werden können.

Ein Stator oder Rotor für eine Turbine umfasst vorteilhafterweise eine derartige Turbinenschaufel als Leit- bzw. Laufschaufel. Hierbei kann die Turbinenschaufel sowohl im Verdichter als auch in der Turbine zum Einsatz kommen.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufel besondere Vorteile hinsichtlich der Lebensdauer, der zulässigen Temperaturen und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch die Einbringung einer Entlastungsnut zwischen Schaufelblatt und Plattform eine Rissbildung durch die Reduktion der Steifigkeit in diesem Bereich vermindert wird. Dies erhöht die Lebensdauer und führt zu geringerem Verschleiß und reduziertem Wartungsaufwand. Gleichzeitig erfordert diese Maßnahme vergleichsweise geringen technischen Aufwand und erlaubt eine kostengünstige Realisierung der genannten Vorteile. Die so gebildete Turbinenschaufel ist auch problemlos nachrüstbar.

Ausführungsbeispiele der Erfindung werden anhand einer Zeichnung näher erläutert. Darin zeigen:
- FIG 1: einen teilweisen Längsschnitt durch eine Gasturbine,
- FIG 2: das Profil eines Schaufelblatts einer Leitschaufel,
- FIG 3: einen teilweisen Längsschnitt durch eine Leitschaufel nach dem Stand der Technik,
- FIG 4: einen teilweisen Längsschnitt durch eine Leitschaufel mit einer Nut im Übergangsbereich vom Schaufelblatt zur Plattform,
- FIG 5: einen teilweisen Längsschnitt durch eine Leitschaufel mit einer zusätzlichen rückseitigen Vertiefung in der Plattform, und
- FIG 6: einen teilweisen Längsschnitt durch eine Leitschaufel mit einer zusätzlichen Verrundung und Kühlluftbohrungen in der Nut.

Gleiche Teile sind in allen Figuren mit denselben Bezugszeichen versehen.

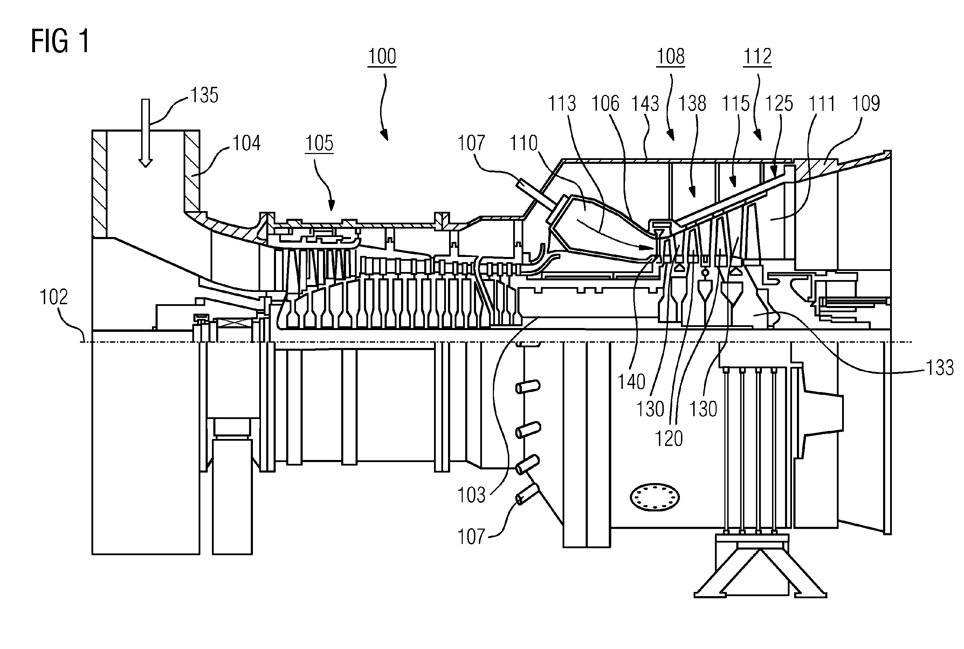

Die FIG 1 zeigt eine Turbine 100, hier eine Gasturbine, in einem Längsteilschnitt. Eine Turbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 106, hier eine Ringbrennkammer, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 106 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. In der Gasturbine 100 herrschen Temperaturen von bis zu 1500 Grad Celsius, da höhere Temperaturen einen besseren Wirkungsgrad bedeuten. Die Leitschaufeln 130 und Laufschaufeln 120 insbesondere der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt.

Die Schaufeln 120, 130 werden für höhere Resistenz gegen Temperaturen sowie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise ZrO2, Y204-Zr02) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

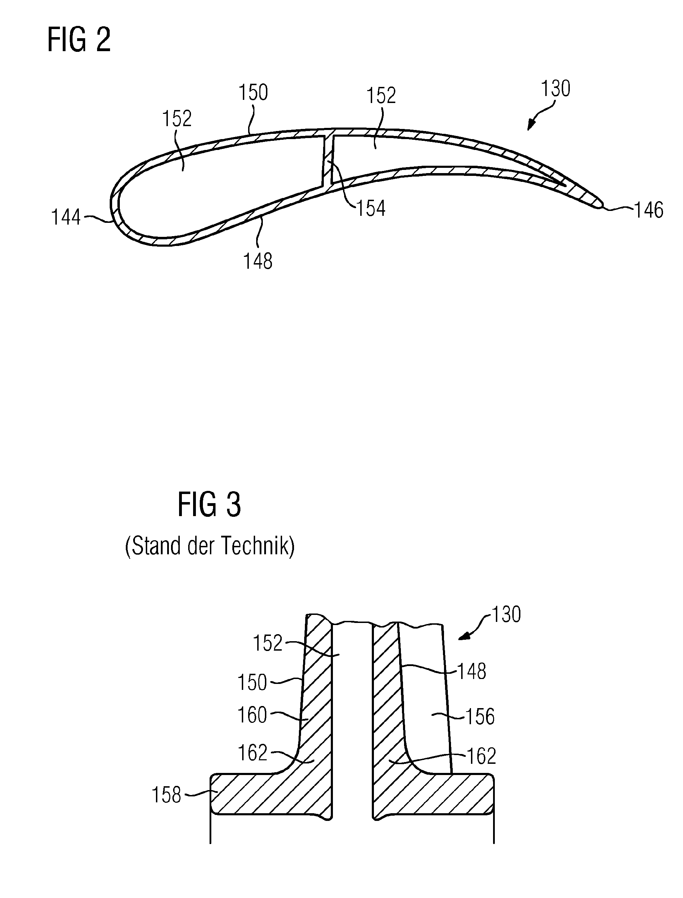

Jede Leitschaufel 130 weist neben dem eigentlichen Schaufelblatt einen auch als Plattform bezeichneten, dem Innengehäuse 138 der Turbine 108 zugewandten Leitschaufelfuß (siehe FIG 3) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel einen derartigen Laufschaufelfuß auf, endet jedoch in einer Laufschaufelspitze.

In FIG 2 ist beispielhaft das Profil einer Leitschaufel 130 im Bereich des Schaufelblatts gezeigt. Das Profil ähnelt dem einer Flugzeugtragfläche. Es weist eine abgerundete Profilnase 144 und eine Profilhinterkante 146 auf. Zwischen Profilnase 144 und Profilhinterkante 146 erstrecken sich die konkave Druckseitenwand 148 und die konvexe Saugseitenwand 150 der Leitschaufel 130. Zwischen Druckseitenwand 148 und Saugseitenwand 150 sind Kühlluftkanäle 152 eingebracht, die sich entlang der in die FIG 2 hineinführenden Längsrichtung der Leitschaufel 130 erstrecken und durch eine Rippe 154 voneinander abgegrenzt sind. Mit anderen Worten: Die Rippe 154 unterteilt den Hohlraum zwischen Druckseitenwand 148 und Saugseitenwand 150 in Kühlluftkanäle 152.

FIG 3 zeigt eine Leitschaufel 130 nach dem Stand der Technik im Längsschnitt aus Sicht der Profilnase 144. Gezeigt sind die Druckseitenwand 148 und die Saugseitenwand 150 im Schaufelblattbereich 156. An das Schaufelblatt 156 schließt sich die Plattform 158 an. Diese ist quer zur Erstreckungsrichtung des Schaufelblatts 156 angeordnet und dient der Abdichtung des Heißgaskanals und der Befestigung der Leitschaufel 130, typischerweise in der Art einer Nut-Feder-Verbindung.

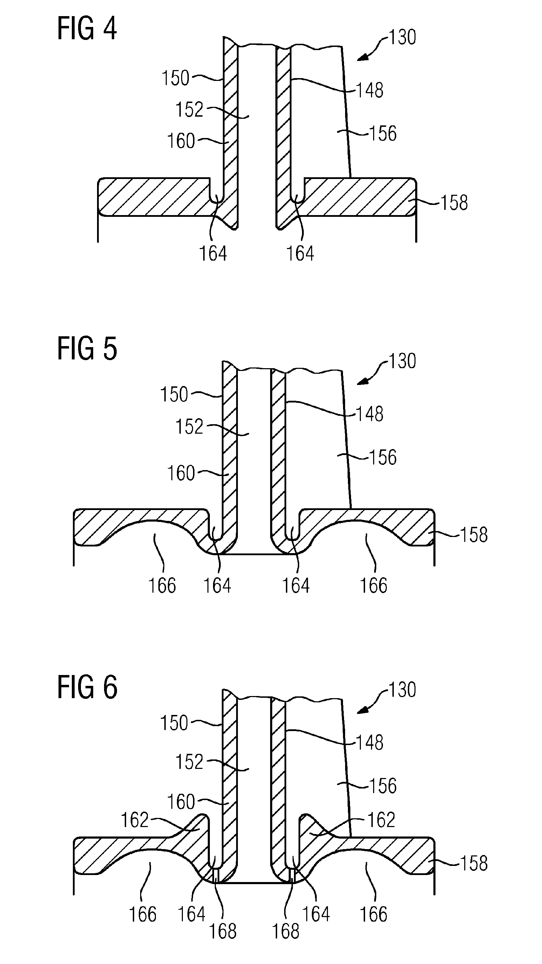

Die Außenseiten der Druckseitenwand 148 und der Saugseitenwand 150 gehen im Übergangsbereich 160 zwischen Schaufelblatt 156 und Plattform 158 über eine Verrundung 162 in die Oberfläche der Plattform 158 über. Durch die dadurch höhere Steifheit und den Temperaturgradienten in diesem Bereich ergeben sich besonders hohe Belastungen des Materials. Dieses Problem wird durch eine Ausgestaltung der Leitschaufel 130 gemäß einer der folgenden FIG 4, 5 und 6 gelöst.

FIG 4 zeigt eine Leitschaufel 130, wiederum im Längsschnitt aus Sicht der Profilnase 144. Im Unterschied zur Leitschaufel 130 nach FIG 3 weist die Leitschaufel 130 im Übergangsbereich 160 keine Verrundung 162 auf, sondern es sind beiderseits des Schaufelblatts 156 Nuten 164 in die Plattform 158 eingebracht. Diese sind direkt dem Schaufelblatt 156 benachbart angeordnet, so dass die Druckseitenwand 148 und die Saugseitenwand 150 als Oberfläche des Schaufelblatts 156 direkt gerade in die Seitenwand der jeweiligen Nut 164 übergehen.

Die Nut 164 kann hierbei vollständig entlang des gesamten Profils des Schaufelblatts 156 umlaufen, dies ist aber nicht notwendig. Zur Stabilisierung des Schaufelblatts 156 kann auch nur eine teilweise Anordnung von Nuten 164 um das Profil herum vorgesehen sein, insbesondere in Bereichen, in denen die betriebliche Spannungsbelastung oberhalb eines gewissen Werts liegt. Diese kann beispielsweise als Kurzzeitfestigkeit (low cycle fatigue, LCF) angegeben sein.

FIG 5 und FIG 6 zeigen nun analog zu FIG 4 abgebildete Leitschaufeln 130 in unterschiedlichen Ausführungsformen der Erfindung. Da FIG 5 und FIG 6 gegenüber den jeweils vorhergehenden Figuren stets zusätzliche Merkmale aufweisen, werden sie jeweils nur anhand ihrer Unterschiede gegenüber der vorhergehenden Figur erläutert.

Die Leitschaufel 130 nach FIG 5 weist zusätzlich Vertiefungen 166 auf, die beiderseits des Schaufelblatts 156 auf der dem Schaufelblatt 156 abgewandten Seite der Plattform 158 eingebracht sind. Diese erstrecken sich parallel zu den Nuten 164 und sind im so nahe an der jeweiligen Nut 164 angeordnet, dass sie die Wandstärke der dem Schaufelblatt 156 abgewandten Seitenwand der Nut 164 gegenüber der FIG 4 reduzieren. Zusätzlich ist in FIG 5 der Rand des plattformseitigen Eingangs des Kühlluftkanals 152 abgerundet, so dass die Wandung der Nut einen U-förmigen Querschnitt aufweist. Dieser ist besonders gut zur Aufnahme von Spannungen geeignet. Die Wandstärke entspricht in etwa der des Schaufelblatts 156 und liegt im Ausführungsbeispiel bei ca. 3 mm bis 4 mm.

Die Leitschaufel 130 nach FIG 6 weist weiter zusätzlich Verrundungen 162 auf, die ausgehend von der Außenseite der Plattform 158 zum Schaufelblatt 156 hin ansteigen, bis sie vor dem Schaufelblatt 156 an der Nut 164 enden. Durch die ansteigende Verrundung 162 ist die Nut 164 insgesamt tiefer. Die Verrundung 162 wird hierbei zur aerodynamischen Optimierung der Außenkontur der Leitschaufel 130 verwendet.

Weiterhing sind in der Leitschaufel 130 nach FIG 6 Kühlluftbohrungen 168 in die Grundfläche der Nut 164 eingebracht. Rückseitig der Plattform 158 eingebrachte Kühlluft dringt somit nicht nur in den Kühlluftkanal 152, sondern auch durch die Kühlluftbohrungen 168 in die Nut, so dass hier eine Filmkühlung der Nut 164 und des Schaufelblatts 156 erreicht wird. Die Kühlluftbohrungen 168 können bedarfsoptimiert oder in gleichmäßigem Abstand in die Nut 164 eingebracht sein.

Die Struktur des Übergangsbereichs 160 und der Plattform 158 wurde hier anhand einer Leitschaufel 130 erläutert, an der sie sowohl am Leitschaufelkopf als auch am Leitschaufelfuß zur Anwendung kommen kann. Ebenso ist sie jedoch an den Laufschaufeln 120 zu realisieren.

## Patentansprüche

1. Turbinenschaufel (120, 130) für eine Turbine (100) mit einer Plattform (158), an der ein im Querschnitt profiliertes Schaufelblatt (156) angeordnet ist,
**dadurch gekennzeichnet, dass**
in einem Übergangsbereich (160) zwischen Plattform (158) und Schaufelblatt (156) in die dem Schaufelblatt (156) zugewandte Oberfläche der Plattform (158) eine sich parallel zum Schaufelblatt (156) erstreckende Nut (164) eingebracht ist.

2. Turbinenschaufel (120, 130) nach Anspruch 1,
bei der die Oberfläche des Schaufelblatts (156) gerade in eine erste Seitenwand der Nut (164) übergeht.

3. Turbinenschaufel (120, 130) nach einem der vorhergehenden Ansprüche,
bei der in die dem Schaufelblatt (156) abgewandte Oberfläche der Plattform (158) eine Vertiefung (166) derart eingebracht ist, dass eine zweite Seitenwand der Nut (164) eine reduzierte Dicke aufweist.

4. Turbinenschaufel (120, 130) nach einem der vorhergehenden Ansprüche,
bei der die Nut (164) in einem Bereich angeordnet ist, dessen betriebliche mechanische Spannungsbelastung oberhalb eines vorgegebenen Grenzwertes liegt.

5. Turbinenschaufel (120, 130) nach einem der vorhergehenden Ansprüche,
bei der in die Plattform (158) eine zur Nut (164) hin in Richtung des Schaufelblatts (156) ansteigende Verrundung (162) eingebracht ist.

6. Turbinenschaufel (120, 130) nach einem der vorhergehenden Ansprüche,
in die Nut (164) eine Anzahl von Kühlluftbohrungen (168) eingebracht ist.

7. Turbinenschaufel (120, 130) nach einem der vorhergehenden Ansprüche,
die als Leitschaufel (130) ausgelegt ist.

8. Turbinenschaufel (120, 130) nach einem der Ansprüche 1 bis 6,
die als Laufschaufel (120) ausgelegt ist.

9. Stator (143) oder Rotor (103) für eine Turbine (100) mit einer Turbinenschaufel (120, 130) nach einem der vorhergehenden Ansprüche.

10. Turbine (100) mit einem Stator (143) und/oder Rotor (103) nach Anspruch 9.

11. Turbine (100) nach Anspruch 10,
die als Gasturbine (100) ausgelegt ist.

12. Kraftwerksanlage mit einer Turbine (100) nach Anspruch 10 oder 11.
